# FASCICULE DE BREVET EUROPEEN

(11) **EP 2 725 674 B1**
(45) Date de publication et mention de la délivrance du brevet: **27.07.2016**
(21) Numéro de dépôt: 13189936.1
(22) Date de dépôt: 23.10.2013
(51) Int. Cl.: H02J 1/14, H02J 3/14, B60R 16/02, H02M 5/04

(54) **Système de distribution de courant électrique à des prises électriques d'un véhicule de transport de passagers**
Stromverteilungssystem an elektrische Steckdosen in einem Transportfahrzeug für Passagiere
System for distributing electrical power to electrical outlets of a passenger vehicle

(30) Priorité: 25.10.2012 FR 1260175
(43) Date de publication de la demande: 30.04.2014
(73) Titulaire: ECE, 75020 Paris (FR)
(72) Inventeur: PRADIER, Jean-Clair, 78800 Houilles (FR); GORDIET, Pascal, 18100 Saint Georges sur la Prée (FR)
(74) Mandataire: Cabinet Plasseraud

(56) Documents cités:
- EP-A1- 1 560 311
- EP-A1- 1 650 846
- WO-A2-2011/081943
- DE-A1-102010 001 333

## Description

L'invention concerne un système de distribution de courant électrique à des prises électriques d'une cabine d'un véhicule de transport de passagers, tel qu'un avion ou un train.

Un système de distribution connu notamment par le brevet US 6,046,513 comporte une source de puissance centrale et une unité de commande centrale connectée à la source de puissance. Ce système de distribution comporte également plusieurs groupes d'unités de distribution locales reliés à l'unité de commande centrale. Chaque groupe, généralement appelé colonne, comporte plusieurs unités de distribution connectées entre elles. Chaque unité de distribution est équipée de prises électriques. La source de puissance centrale est propre à transférer aux unités de distribution un courant alternatif triphasé à 115 Volts. Chaque unité de distribution comporte un convertisseur propre à convertir le courant électrique alternatif à 115 Volts, 400 Hz réceptionné en un courant alternatif à 110 Volts 60 Hz qui est fourni aux prises électriques.

Un tel système de distribution comporte un nombre de convertisseurs de puissance important, chaque convertisseur de puissance ne pouvant alimenter en puissance électrique que trois ou quatre sièges.

En conséquence, ce système de distribution présente une masse et un encombrement importants. Ce système est notamment mal adapté à des petits porteurs. De plus, ce système ne propose pas le service de fourniture de puissance par l'intermédiaire de ports USB. Or, ce service est de plus en plus demandé avec l'augmentation du nombre et des services proposés par les téléphones portables.

Il est également connu, notamment par le document EP 1 650 846, un système de distribution comportant un convertisseur commun à plusieurs unités de distribution. Un tel système a été décrit de façon détaillée en relation avec les figures 1 et 2 de la présente demande de brevet.

Ce système est inadapté à la fourniture de courant à des ports USB car les ports USB sont alimentés par de fort courant (environ 2 Ampères) à des tensions faibles (environ 5 Volts). Pour éviter les pertes de puissance en ligne, il est nécessaire de transporter de tel courant sur des câbles ayant des diamètres importants. Néanmoins, ces câbles, réalisés en cuivre, sont onéreux. De plus, en augmentant le diamètre des câbles, on augmente également la masse de l'avion et, par conséquent, la quantité de kérosène nécessaire pour déplacer l'avion.

Le document WO-A-2011/081943 décrit un autre systeme de distribution de courant électrique selon l'état de la technique.

Le but de la présente invention est de proposer un système de distribution de masse et d'encombrement réduits et qui offre le service de fourniture de ports USB.

A cet effet, l'invention a pour objet un système de distribution de courant électrique à des prises électriques d'un véhicule de transport de passagers, ledit système de distribution comprenant :
- une source de puissance propre à délivrer un courant électrique ;
- des unités de distribution équipées de prises électriques;
- un convertisseur de puissance relié en entrée à la source de puissance pour convertir le courant électrique délivré par la source de puissance ; le convertisseur de puissance étant un convertisseur de puissance commun ayant une ou plusieurs sorties reliées à l'ensemble des unités de distribution du système de distribution pour transmettre le courant électrique converti aux prises électriques de l'ensemble des unités de distribution du système de distribution,
caractérisé en ce qu'il comporte au moins une prise électrique est un port USB, et en ce que chaque unité de distribution comporte en outre un convertisseur de puissance secondaire ayant une entrée connectée à une sortie du convertisseur de puissance commun et au moins une sortie connectée audit port USB.

Avantageusement, l'association d'un convertisseur commun à l'ensemble des unités de distribution et d'un convertisseur secondaire dans chaque unité de distribution permet de diminuer la masse et l'encombrement du système car, dans ce cas chaque unité de distribution secondaire peut alimenter en puissance électrique dix à quinze sièges et des câbles de diamètre optimisé peuvent être utilisés.

Suivant des modes particuliers de réalisation, le système de distribution comporte une ou plusieurs des caractéristiques suivantes :
- l'ensemble des prises électriques de l'ensemble des unités de distribution sont des ports USB ;
- le système comporte un bloc de commande propre à transmettre aux unités de distribution un signal d'autorisation ou de non autorisation de délivrance de courant à chaque prise électrique, et les unités de distribution comportent chacune un dispositif de coupure apte à autoriser ou à couper la délivrance de courant électrique à au moins une prise électrique ;
- le système comporte au moins un disjoncteur différentiel connecté à une sortie du convertisseur de puissance commun ;
- le convertisseur de puissance commun est propre à convertir un courant électrique alternatif triphasé de 115 Volts à une fréquence de 400 Hertz en un courant électrique alternatif monophasé de 110 Volts à une fréquence de 60 Hertz ;
- le convertisseur de puissance secondaire est propre à convertir le courant alternatif monophasé de 110 Volts à une fréquence de 60 Hertz en un courant électrique continu ;
- le convertisseur de puissance commun est propre à convertir un courant électrique alternatif triphasé de 115 Volts à une fréquence de 400 Hertz en un courant électrique continu monophasé de 42 Volts ;
- le convertisseur de puissance secondaire est propre à convertir le courant électrique continu monophasé de 42 Volts en un courant électrique continu.

L'invention sera mieux comprise à la lecture de la description qui va suivre, donnée uniquement à titre d'exemple et faite en se référant aux dessins sur lesquels :
- la figure 1 est une vue schématique d'un système de distribution selon l'état de la technique ;
- la figure 2 est un schéma simplifié représentant une unité de distribution du système de distribution illustré sur la figure 1 ;
- la figure 3 est une vue schématique d'un système de distribution selon un premier mode de réalisation de l'invention ;
- la figure 4 est une vue schématique d'un système de distribution selon un deuxième mode de réalisation de l'invention ; et
- la figure 5 est une vue schématique d'un système de distribution selon un troisième mode de réalisation de l'invention.

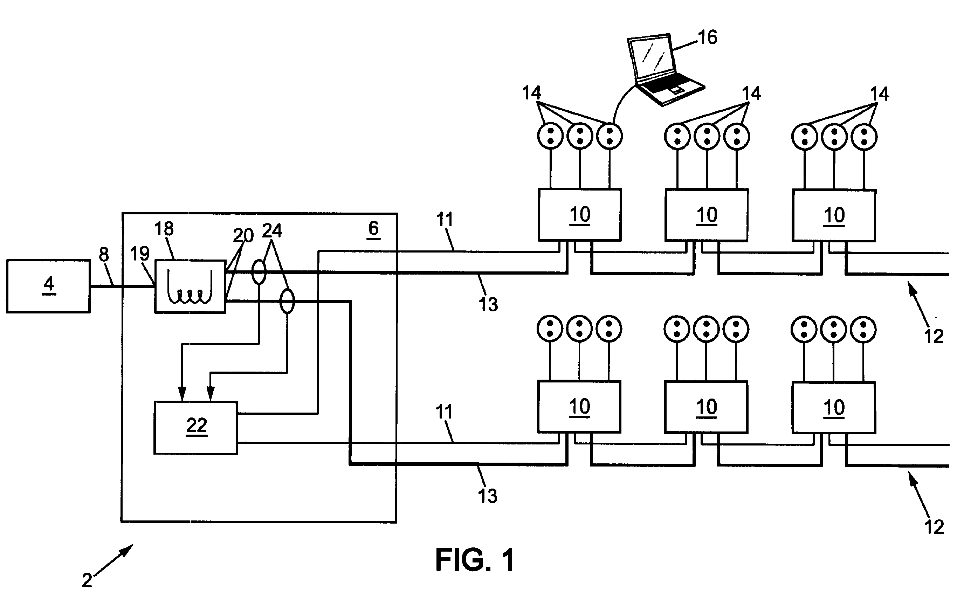

En référence à la figure 1, le système de distribution 2 de courant électrique comporte une source de puissance centrale 4 généralement appelée EPDS (de l'anglais « Electrical Power Distribution System »), une unité de commande centrale 6 généralement appelée MCU (de l'anglais « Master Control Unit ») connectée à la source de puissance centrale 4 par une première ligne de puissance 8.

Le système de distribution 2 comporte en outre des unités de distribution locales 10, généralement appelées SPB (de l'anglais « Seat Power Box »), installées à côté des sièges des passagers et distribuées dans l'ensemble de la cabine de l'avion.

Les unités de distribution 10 sont réparties selon des groupes d'unités de distribution généralement appelés colonnes 12. Les colonnes 12 sont connectés en parallèles les unes aux autres. Chaque colonne 12 est reliée et à l'unité de commande centrale 6 par une seconde ligne de puissance 13 et par une ligne de communication bidirectionnelle 11. Dans chaque colonne 12, les unités de distribution 10 sont reliées en série entre elles et à l'unité de commande centrale 6 par la seconde ligne de puissance 13 et par une ligne de communication 11.

Pour simplifier la figure 1, seuls deux colonnes 12 ont été représentées. En pratique, le système de distribution peut comporter une seule colonne 12 ou un nombre de colonnes 12 supérieur à deux.

Les unités de distribution 10 sont équipées de prises électriques 14 destinées à recevoir des appareils électroniques personnels 16 de type ordinateur portable, tablette graphique ou lecteur audio. Chaque prise électrique 14 comporte un détecteur propre à détecter l'introduction d'une fiche mâle dans celle-ci et à générer un signal interprété par le microprocesseur de l'unité de distribution 10 comme une demande de distribution de courant électrique.

La source de puissance 4 est propre à délivrer à l'unité de commande centrale 6 un courant alternatif triphasé de 115 Volts à une fréquence 400 Hertz par l'intermédiaire de la première 8 ligne de puissance.

De préférence, la ligne de communication 11 est constituée par la ligne monofilaire qui équipe déjà les avions actuels et qui est généralement appelée « Keyline » par exemple en implémentant un bus de communication CAN en mode unifilaire et basse vitesse tel que le bus appelé en anglais SWCAN opu « Single Wire CAN ». En variante, la ligne de communication 11 est constituée par un bus de communication de type CAN ou RS485.

L'unité de commande centrale 6 comporte un convertisseur de puissance commun 18 propre à convertir le courant électrique délivré par la source de puissance centrale 4 en une tension et fréquence utilisables par des appareils électroniques personnels 16. Le convertisseur de puissance commun 18 présente une entrée 19 reliée à la source de puissance centrale 4 par la première ligne de puissance 8, et des sorties 20 reliées chacune à l'ensemble des unités de distribution 10 de chaque colonne 12, par les secondes lignes de puissance 13. Ainsi, le courant électrique converti par le convertisseur de puissance commun 18 est transmis aux prises électriques 14 de l'ensemble des unités de distribution 10 du système de distribution 2.

Le convertisseur de puissance commun 18 peut convertir le courant électrique alternatif triphasé de 115 Volts en une tension et un courant totalement adapté à l'utilisation faite dans la cabine. De préférence, le convertisseur de puissance commun 18 convertit le courant provenant de la source de puissance centrale 4 en un courant alternatif monophasé de 110 Volts à une fréquence de 60 Hertz.

L'unité de commande centrale 6 comporte en outre un bloc de commande 22 et des capteurs de courant 24 montés sur chaque seconde ligne de puissance 13 pour mesurer l'intensité du courant électrique transmis aux unités de distribution 10 de chaque colonne 12. Le bloc de commande 22 comprend une unité centrale de traitement CPU. Il est, par exemple, constitué par un microprocesseur.

Le bloc de commande 22 est propre à comparer les intensités de courant électrique mesurées à des valeurs de seuils prédéfinies et à transmettre aux unités de distribution 10 des ordres d'autorisation ou de non autorisation de délivrance de courant à une prise électrique 14 qui en a fait la demande, en fonction du résultat de cette comparaison.

Le bloc de commande 22 est propre à transmettre un signal de mise sous tension ou hors tension des prises électriques 14 aux unités de distribution 10, lors des phases d'atterrissage et de décollage. Il est également propre à transmettre à un système de gestion de la cabine non représenté des informations relatives à ses propres pannes et aux pannes des prises électriques.

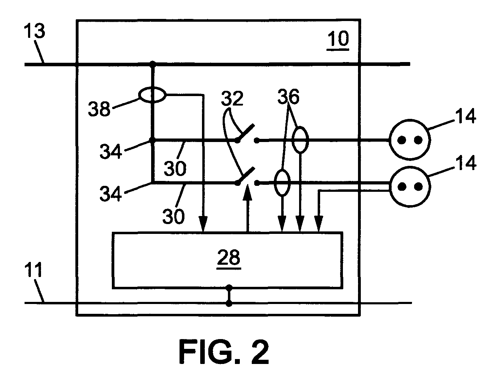

En référence à la figure 2, chaque unité de distribution 10 comporte une unité de calcul 28 reliée à la ligne de communication 11, des prises électriques 14 connectées à la seconde ligne de puissance 13 correspondante sur des branches de dérivation 30 montés en parallèles les unes aux autres, et des interrupteurs 32 connectés sur chaque branche de dérivation 30 entre un noeud de dérivation 34 et la prise électrique 14.

Sur la figure 2, seules deux prises électriques 14 ont été représentées pour simplifier la représentation. En pratique, l'unité de distribution 10 comporte généralement quatre prises électriques 14.

L'unité de calcul 28 comporte une unité centrale de traitement CPU. Elle est propre à transmettre au bloc de commande 22 de l'unité de commande centrale 6, les demandes de distribution provenant des prises électriques 14, à recevoir l'ordre d'autorisation ou de non autorisation de délivrance de courant électrique et à commander en conséquence l'ouverture ou la fermeture de l'interrupteur 32 relié à la prise électrique qui a fait la demande de distribution. L'unité de calcul 28 et l'interrupteur 32 forment un dispositif de coupure de la délivrance de courant électrique à une prise électrique.

L'unité de calcul 28 comporte en outre des capteurs de courant 36 connectés chacun sur une branche de dérivation 30 et un capteur de courant 38 connecté entre la seconde ligne de puissance 13 et les noeuds de dérivation 34. Les capteurs de courant 36 et 38 sont propres à mesurer et à communiquer à l'unité de calcul 28, l'intensité du courant électrique distribué à chaque prise électrique 14 et respectivement l'intensité du courant électrique distribué à l'ensemble de l'unité de distribution 10. L'unité de calcul 28 transmet ces valeurs à l'unité de commande centrale 6, via la ligne de communication 11.

L'unité de calcul 28 est apte à déterminer les pannes sur les prises électriques 14 et pour transmettre ses informations de pannes au bloc de commande 22, par la ligne de communication 11.

En variante, les unités de distribution 10 ne comportent pas de capteurs de courant 36 et 38. Dans ce cas, l'unité de commande centrale 6 utilise uniquement l'intensité du courant électrique distribué dans chaque colonne 12 pour choisir d'autoriser ou non la distribution de courant électrique à une prise électrique 14 qui en fait la demande.

Le convertisseur de puissance commun 18 est l'unique convertisseur de puissance du système de distribution propre à délivrer du courant électrique à l'ensemble des prises électriques 14 du système de distribution 2. Les unités de distribution 10 ne comportent aucun convertisseur de puissance supplémentaire. Le courant électrique converti par le convertisseur de puissance commun 18, par exemple, en un courant alternatif monophasé de 110 Volts à une fréquence de 60 Hertz alimente directement les prises électriques 14.

En fonctionnement, le courant électrique généré par la source de puissance centrale 4 est converti par le convertisseur de puissance commun 18 et est distribué à l'ensemble des unités de distribution 10. Lorsqu'un passager introduit une fiche mâle dans une prise électrique 14, l'unité de distribution 10 équipée de cette prise électrique 14 transmet une demande de distribution par la ligne de communication 11 au bloc de commande 22. Le bloc de commande 22 détermine l'intensité instantanée du courant électrique distribué par la ligne de puissance correspondante, la compare aux valeurs seuils et transmet à l'unité de distribution 10 correspondante un ordre d'autorisation ou de non autorisation en fonction du résultat de la comparaison. Lorsque l'unité de calcul 28 reçoit un ordre d'autorisation de distribution, elle commande la fermeture de l'interrupteur 32 correspondant. Le courant électrique converti par le convertisseur de puissance commun 18 alimente la prise électrique qui en a fait la demande.

Ainsi, le convertisseur de puissance commun 18 convertissant du courant électrique en une tension et fréquence utilisables par des appareils électroniques personnels 16, alimente en courant électrique converti l'ensemble des unités de distribution 10. Les unités de distribution 10 ne comportent plus de convertisseur de puissance à 110 V et sont uniquement en charge de la distribution du courant électrique aux prises électriques 14.

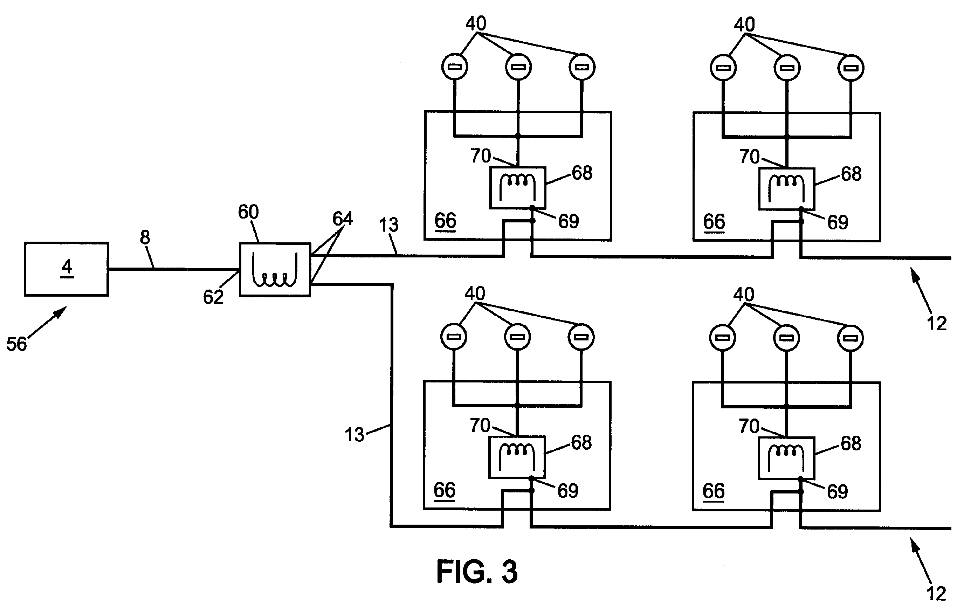

Le système de distribution selon le premier mode de réalisation de l'invention représenté sur la figure 3, est un système bas coût permettant de répondre à de nouvelles demandes provenant des passagers ou des compagnies aériennes. En effet, de plus en plus de passagers souhaitent avoir simplement accès à un port USB pour brancher leurs tablettes graphiques ou leurs téléphones portables. De même, de plus en plus de compagnies aériennes fournissent des tablettes graphiques aux passagers qui le souhaitent.

En référence à la figure 3, le système de distribution 56 selon le premier mode de réalisation de l'invention comporte un convertisseur de puissance commun 60. Il est propre à convertir le courant électrique alternatif triphasé à 115 Volts à une fréquence de 400 Hertz, provenant de la source de puissance centrale 4, en un courant électrique continu, basse tension, de par exemple 42 Volts. Il présente une entrée 62 reliée à la source de puissance centrale 4 et des sorties 64 reliées à l'ensemble des unités de distribution 66 du système de distribution.

Selon ce mode de réalisation de l'invention, l'ensemble des prises électriques 14 de l'ensemble des unités de distribution 66 sont des ports USB 40 et les unités de distribution 66 comportent, chacune, un convertisseur de puissance secondaire 68 relié en entrée 69 au convertisseur de puissance commun 60 par l'intermédiaire de la ligne de puissance 13 et en sortie 70 aux ports USB 40 montés en parallèle les uns par rapport aux autres. Le convertisseur de puissance secondaire 68 est propre à convertir le courant électrique continu à 42 Volts provenant du convertisseur de puissance commun 60 en un courant continu basse tension propre alimenter les ports USB 40.

La source de puissance centrale 4 est conçue pour avoir une puissance suffisante pour alimenter l'ensemble des passagers sans limitation. Ainsi, le système de distribution ne comporte aucune unité de commande centrale propre à gérer la distribution de courant électrique aux prises électriques ni aucune unité de calcul installée dans les unités de distribution.

Avantageusement, le courant électrique basse tension en continu minimise les besoins en protection du personnel et simplifie la certification.

Les éléments du système de distribution 71 selon le deuxième mode de réalisation de l'invention identiques aux éléments du système de distribution décrit ci-dessus sont référencés par les mêmes références et ne seront pas décrit en détail une seconde fois.

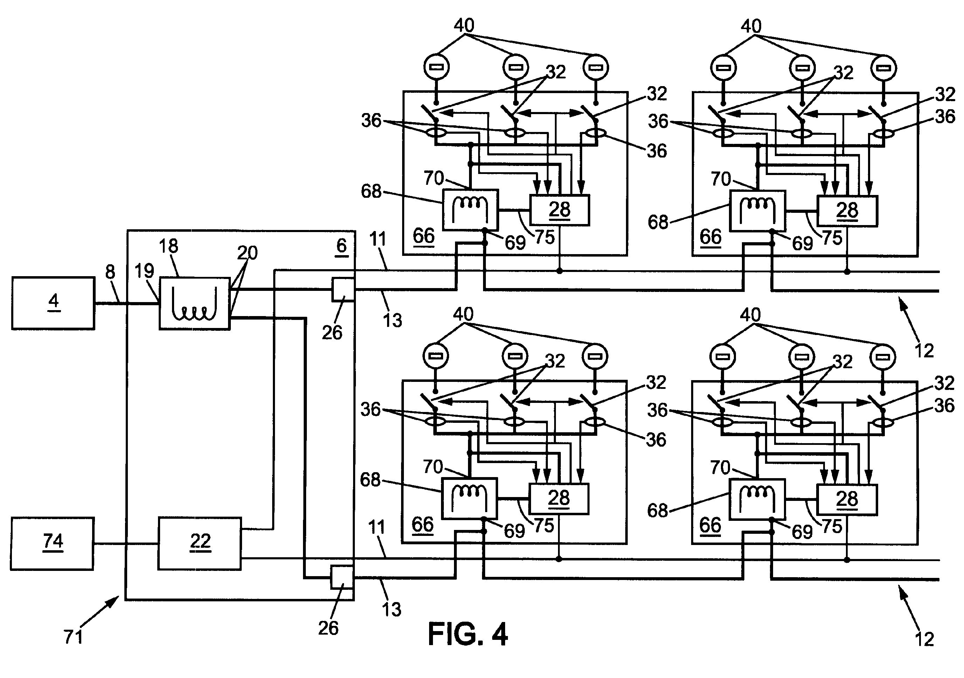

Le système de distribution 71 selon le deuxième mode de réalisation de l'invention représenté sur la figure 4 comporte une source de puissance centrale 4, une unité de commande centrale 6 connectée à la source de puissance centrale 4 par une première ligne de puissance 8, des unités de distribution locales 66 reliées, dans chaque colonne 12, en série entre elles et à l'unité de commande centrale 6 par une seconde ligne de puissance 13 et par une ligne de communication bidirectionnelle 11. Les colonnes 12 sont connectées en parallèles les une aux autres. Les unités de distribution locales 66 sont équipées de ports USB 40.

La source de puissance 4 est apte à délivrer un courant électrique alternatif 115 Volts.

L'unité de commande centrale 6 comporte un convertisseur de puissance commun 18 propre à convertir le courant électrique délivré par la source de puissance centrale 4 en une tension de 110 Volts, alternatif, 60 Hertz ou de 42 Volts continu, un bloc de commande 22 relié, d'une part, aux unités de calcul 28 des unités de distribution 66 par la ligne de communication 11 et, d'autre part, au système de gestion de la cabine 74 appelé en anglais CMS « Cabin Management System » pour lui indiquer ses propres pannes et les pannes des unités de distribution 66.

Le bloc de commande 22 est propre à transmettre un signal de mise sous tension ou hors tension des ports USB 40 aux unités de distribution 66, lors des phases d'atterrissage et de décollage. Le bloc de commande 22 est propre à transmettre un signal de commande de délivrance ou de non délivrance de courant d'un port USB particulier sur commande d'un membre du personnel de bord de l'avion. Il est également propre à transmettre au système de gestion de la cabine 74 des informations relatives à ses propres pannes et aux pannes des ports USB 40.

Le bloc de commande 22 est propre à enregistrer la valeur de l'intensité du courant électrique délivré à chaque port USB 40 et à l'additionner de manière à pouvoir afficher à la fin du vol, la consommation électrique de chaque port USB 40 et donc la consommation électrique réalisée par chaque passager.

Selon le mode de réalisation illustré sur la figure 4, l'unité de commande centrale 6 comporte en outre un disjoncteur 26 monté sur chaque seconde ligne de puissance 13 pour protéger l'unité de commande centrale 6 contre les surintensités et les défauts à la masse.

Les unités de distribution 66 sont similaires aux unités de distribution 66 du système de distribution selon le premier mode de réalisation de l'invention à l'exception du fait qu'elles contiennent en outre un capteur de courant 36 et un interrupteur 32 montés en amont de chaque port USB 40, ainsi qu'une unité de calcul 28 reliée, par une ligne de communication, aux capteurs de courant 36 et aux interrupteurs 32.

Les capteurs de courant 36 sont propres à mesurer l'intensité du courant électrique délivrée à chaque port USB 40 et à transmettre cette valeur d'intensité à l'unité de calcul 28.

L'unité de calcul 28 est propre à commander la délivrance ou l'arrêt de la délivrance de courant électrique à un port USB 40 particulier par la commande individuelle de l'ouverture et de la fermeture d'un interrupteur 32 sur réception du signal de commande de délivrance ou de non délivrance transmis par le bloc de commande 22.

L'unité de calcul 28 est reliée au convertisseur de puissance secondaire 68 par une ligne d'alimentation et de communication 75 et à la ligne de communication 11. Elle est apte à commander l'arrêt de la délivrance de courant électrique à l'ensemble des ports USB 40 par l'intermédiaire du convertisseur de puissance secondaire 68 ou par commande de l'ensemble des interrupteurs 32 sur réception du signal de mise hors tension transmis par le bloc de commande 22.

L'unité de calcul 28 est reliée à la sortie 70 du convertisseur de puissance secondaire 68 pour faire une copie de la tension en sortie du convertisseur de puissance secondaire 68 et déterminer en fonction de cette tension les pannes sur les ports USB. Enfin, l'unité de calcul 28 est adaptée pour transmettre ces informations de pannes ainsi que les valeurs d'intensités du courant électrique consommé par chaque port USB 40 au bloc de commande 22, par la ligne de communication 11.

Dans ce mode de réalisation, le convertisseur de puissance secondaire 68 est propre à convertir la tension de 110 Volts, alternatif, 60 Hertz ou de 42 Volts continu issus du convertisseur de puissance primaire 60 en un courant électrique continu comprise entre 3 Volts et 15 Volts et de préférence égale à 5 Volts.

Avantageusement, le personnel de bord peut commander individuellement chaque interrupteur 32 par l'intermédiaire du bloc de commande 22, c'est-à-dire par l'intermédiaire d'une unité de traitement CPU centralisée. Le dispositif de commande individuelle de chaque interrupteur 32 ainsi que l'implémentation de capteur de courant 36 propre à mesurer la consommation de chaque port USB 40 permet au personnel de bord de facturer individuellement chaque passager pour sa consommation électrique. Cette facturation se fait aisément en consultant uniquement le bloc de commande 22.

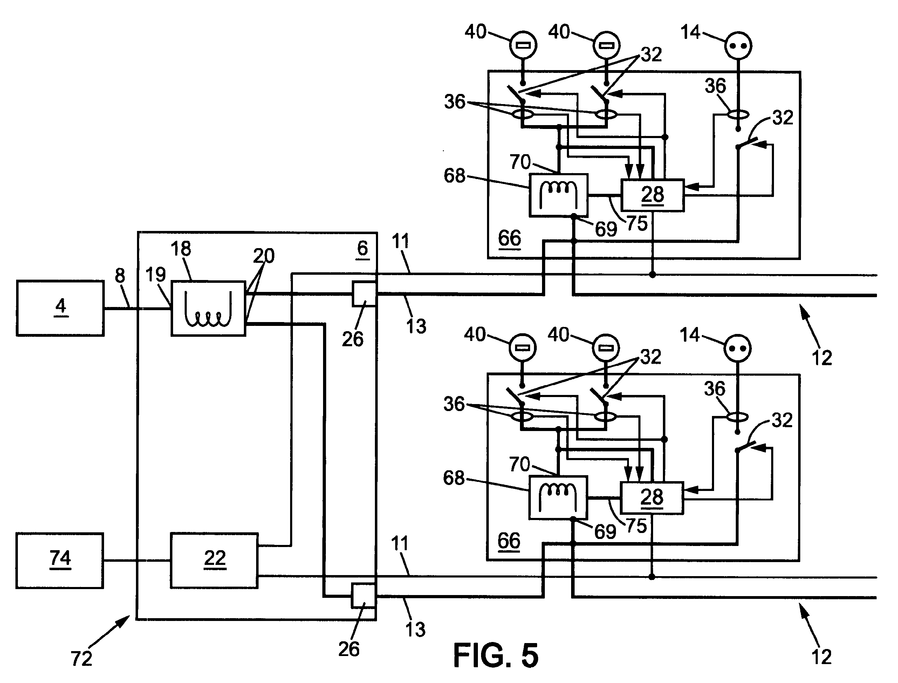

En variante, les unités de distribution 66 du système de distribution 71 selon le quatrième mode de réalisation ne comporte pas d'interrupteurs 32 comme dans le mode de réalisation décrit en relation avec la figure 5.

Dans un gros porteur, par exemple un A320 ou un A330, plusieurs systèmes de distribution doivent être implémentés pour distribuer du courant électrique à l'ensemble des sièges de la cabine. Si, par exemple, le convertisseur de puissance commun 18, 60 est dimensionné pour fournir une puissance de 1 500 Watts, il peut alimenter 15 sièges en 110 Volts ou une centaine de sièges à 5 Volts.

Le système de distribution 72 selon le troisième mode de réalisation de l'invention représenté sur la figure 5 est identique au système de distribution 71 selon le deuxième mode de réalisation à l'exception du fait que l'unité de distribution 66 comporte en outre une prise électrique 14 connectée directement à la seconde ligne de puissance 13. Un commutateur 32 commandé par l'unité de calcul 28 est connecté entre la prise électrique 14 et la connexion à la seconde ligne de puissance 13. La prise électrique 14 fournit directement la puissance électrique convertie par le convertisseur commun 18, sans que cette puissance traverse le convertisseur de puissance secondaire.

Un capteur de courant 36 est connecté sur la ligne de courant alimentant la prise électrique 14, entre le commutateur 32 et la connexion à la seconde ligne de puissance 13. Ce capteur de courant 36 est propre à mesurer et à communiquer à l'unité de calcul 28, l'intensité du courant électrique distribuée à la prise électrique 14.

Lorsque le convertisseur commun 18 convertit la puissance électrique en un courant électrique alternatif monophasé de 110 Volts à une fréquence de 60 Hertz, l'unité de calcul 28 est apte à réaliser une fonction de protection, de type disjoncteur différentiel GFI destinée à protéger les passagers d'un choc électrique,.

Dans l'ensemble des modes de réalisation décrits, le convertisseur de puissance secondaire est localisé auprès du siège.

## Revendications

1. Système de distribution (56, 71, 72) de courant électrique à des prises électriques (14, 40) d'un véhicule de transport de passagers, ledit système de distribution (56, 71) comprenant :
- une source de puissance (4) propre à délivrer un courant électrique ;
- des unités de distribution (66) équipées de prises électriques (40) ;
- un convertisseur de puissance (18, 60) relié en entrée (19, 62) à la source de puissance (4) pour convertir le courant électrique délivré par la source de puissance (4), le convertisseur de puissance (18, 60) étant un convertisseur de puissance commun ayant une ou plusieurs sorties (20, 64) reliées à l'ensemble des unités de distribution (66) du système de distribution pour transmettre le courant électrique converti aux prises électriques (40) de l'ensemble des unités de distribution (66) du système de distribution,
**caractérisé en ce que** au moins une prise électrique (40) est un port USB (40), chaque unité de distribution (66) comportant en outre un convertisseur de puissance secondaire (68) ayant une entrée (69) connectée à une sortie (20, 64) du convertisseur de puissance commun (18, 60) et au moins une sortie (70) connectée audit port USB (40).

2. Système de distribution (56) selon la revendication 1, dans lequel l'ensemble des prises électriques (40) de l'ensemble des unités de distribution (66) sont des ports USB (40).

3. Système de distribution (71, 72) selon l'une quelconque des revendications 1 et 2, dans lequel le système (71, 72) comporte un bloc de commande (22) propre à transmettre aux unités de distribution (66) un signal d'autorisation ou de non autorisation de délivrance de courant à chaque prise électrique (40), et dans lequel les unités de distribution (66) comportent chacune un dispositif de coupure (28, 32) apte à autoriser ou à couper la délivrance de courant électrique à au moins une prise électrique (40).

4. Système de distribution (71, 72) selon l'une quelconque des revendications 1 à 3, qui comporte au moins un disjoncteur différentiel (26) connecté à une sortie (20) du convertisseur de puissance commun (18).

5. Système de distribution (56, 71, 72) selon l'une quelconque des revendications 1 à 4, dans lequel le convertisseur de puissance commun (18) est propre à convertir un courant électrique alternatif triphasé de 115 Volts à une fréquence de 400 Hertz en un courant électrique alternatif monophasé de 110 Volts à une fréquence de 60 Hertz.

6. Système de distribution (56, 71, 72) selon l'une quelconque des revendications 1 à 5, dans lequel le convertisseur de puissance commun (60) est propre à convertir un courant électrique alternatif triphasé de 115 Volts à une fréquence de 400 Hertz en un courant électrique continu monophasé de 42 Volts.

7. Système de distribution (56, 71, 72) selon la revendication 6, dans lequel le convertisseur de puissance secondaire (68) est propre à convertir le courant électrique continu monophasé de 42 Volts en un courant électrique continu.

## Patentansprüche

1. Verteilersystem (56, 71, 72) zur Verteilung von elektrischem Strom zu Steckdosen (14, 40) eines Beförderungsmittels für den Passagiertransport, wobei das besagte Verteilersystem (56, 71) folgendes umfasst:
- Eine Leistungsquelle (4), die geeignet ist, einen elektrischen Strom auszugeben;
- Verteilereinheiten (66), die mit elektrischen Steckdosen (40) ausgestattet sind;
- Einen Leistungswandler (18, 60), der an einem Eingang (19, 62) mit der Leistungsquelle (4) verbunden ist, um den elektrischen Strom, der von der Leistungsquelle (4) ausgegeben wird, umzuwandeln, wobei der Leistungswandler (18, 60) ein gemeinsamer Leistungswandler ist, der einen oder mehrere Ausgänge (20, 64) aufweist, die mit der Gesamtheit der Verteilereinheiten (66) des Verteilersystems verbunden sind, um den umgewandelten elektrischen Strom zu den elektrischen Steckdosen (40) der Gesamtheit der Verteilereinheiten (66) des Verteilersystems weiterzuleiten,
**dadurch gekennzeichnet, dass** wenigstens eine elektrische Steckdose (40) ein USB-Anschluss (40) ist, wobei jede Verteilereinheit (66) ferner einen sekundären Leistungswandler (68) enthält, der einen Eingang (69), welcher an einen Ausgang (20, 64) des gemeinsamen Leistungswandlers (18, 60) angeschlossen ist, und wenigstens einen Ausgang (70), welcher an den besagten USB-Anschluss (40) angeschlossen ist, aufweist.

2. Verteilersystem (56) nach Anspruch 1, wobei die Gesamtheit der elektrischen Steckdosen (40) der Gesamtheit der Verteilereinheiten (66) USB-Anschlüsse (40) sind.

3. Verteilersystem (71, 72) nach einem der Ansprüche 1 und 2, wobei das Verteilersystem (71, 72) eine Steuereinheit (22) enthält, die geeignet ist, an die Verteilereinheiten (66) ein Signal zur Autorisierung oder zur Nicht-Autorisierung des Ausgebens von Strom an jede elektrische Steckdose (40) zu übermitteln, und wobei die Verteilereinheiten (66) jeweils eine Unterbrechungsvorrichtung (28, 32) enthalten, die fähig ist, das Ausgeben von elektrischem Strom an wenigstens eine elektrische Steckdose (40) zu autorisieren oder zu unterbrechen.

4. Verteilersystem (71, 72) nach einem der Ansprüche 1 bis 3, welches wenigstens einen Fehlerstromschutzschalter (26), der an einen Ausgang (20) des gemeinsamen Leistungswandlers (18) angeschlossen ist, enthält.

5. Verteilersystem (56, 71, 72) nach einem der Ansprüche 1 bis 4, wobei der gemeinsame Leistungswandler (18) geeignet ist, einen dreiphasigen elektrischen Wechselstrom von 115 Volt bei einer Frequenz von 400 Hertz in einen einphasigen elektrischen Wechselstrom von 110 Volt bei einer Frequenz von 60 Hertz umzuwandeln.

6. Verteilersystem (56, 71, 72) nach einem der Ansprüche 1 bis 5, wobei der gemeinsame Leistungswandler (60) geeignet ist, einen dreiphasigen elektrischen Wechselstrom von 115 Volt bei einer Frequenz von 400 Hertz in einen einphasigen elektrischen Gleichstrom von 42 Volt umzuwandeln.

7. Verteilersystem (56, 71, 72) nach Anspruch 6, wobei der sekundäre Leistungswandler (68) geeignet ist, den einphasigen elektrischen Gleichstrom von 42 V in einen elektrischen Gleichstrom umzuwandeln.

## Claims

1. System (56, 71, 72) of distributing electric current to electrical outlets (14, 40) of a passenger vehicle, said distribution system (56, 71, 72) comprising:
- a power source (4) capable of delivering an electric current;
- distribution units (66) equipped with electrical outlets (40) ;
- a power converter (18, 60) connected in input (19, 62) to the power source (4) in order to convert the electric current delivered by the power source (4), the power converter (18, 60) being a common power converter having one or more outputs (20, 64) connected to all the distribution units (66) of the distribution system in order to transmit the converted electric current to the electrical outlets (40) of all the distribution units (66) of the distribution system,
wherein at least one electrical outlet (40) is a USB port (40), and wherein each distribution unit (66) additionally comprises a secondary power converter (68) having an input (69) connected to an output (20, 64) of the common power converter (18, 60) and at least one output (70) connected to said USB port (40).

2. Distribution system (56) according to claim 1, wherein all the electrical outlets (40) in all the distribution units (66) are USB ports (40).

3. Distribution system (71, 72) according to any of claim 1 and 2, wherein the system (71, 72) comprises a control module (22) able to transmit to the distribution units (66) a signal authorizing or not authorizing the delivery of current to each electrical outlet (40), and wherein the distribution units (66) each comprise a cutoff device (28, 32) able to authorize or cut off the delivery of electric current to at least one electrical outlet (40).

4. Distribution system (71, 72) according to any of claims 1 to 3, comprising at least one residual current device (26) connected to an output (20) from the common power converter (18).

5. Distribution system (56, 71, 72)according to any one of claims 1 to 4, wherein the common power converter (18) is able to convert a three-phase alternating current of 115 volts at a frequency of 400 Hertz into a single phase alternating current of 110 volts at a frequency of 60 Hertz.

6. Distribution system (56, 71, 72) according to any of claims 1 to 5, wherein the common power converter (60) is able to convert a three phase alternating current of 115 volts at a frequency of 400 Hertz into a single phase direct current of 42 volts.

7. Distribution system (56, 71, 72) according to claim 6, wherein the secondary power converter (68) being able to convert the single phase direct current of 42 volts into a direct current.
